(19) Europäisches Patentamt
European Patent Office
Office européen des brevets

(11) **EP 4 294 859 B1**

(12) **EUROPEAN PATENT SPECIFICATION**

(45) Date of publication and mention
of the grant of the patent:
**06.11.2024 Bulletin 2024/45**

(21) Application number: **22705065.5**

(22) Date of filing: **18.02.2022**

(51) International Patent Classification (IPC):
*C08J 3/28* (2006.01)     *C08L 23/26* (2006.01)
*C08L 23/12* (2006.01)

(52) Cooperative Patent Classification (CPC):
(C-Sets available)
**C08L 23/12;** C08L 2201/08; C08L 2203/14   (Cont.)

(86) International application number:
**PCT/EP2022/054075**

(87) International publication number:
**WO 2022/175451 (25.08.2022 Gazette 2022/34)**

(54) **HIGH MELT STRENGTH PP BLENDS FOR FOAM WITH HIGH THERMOSTABILITY**

POLYPROPYLENZUSAMMENSETZUNG MIT HOHER SCHMELZFESTIGKEIT

COMPOSITION DE POLYPROPYLÈNE À RÉSISTANCE ÉLEVÉE À LA FUSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.02.2021  EP 21157928
18.02.2021  EP 21157932
18.02.2021  EP 21157935
18.02.2021  EP 21157966
18.02.2021  EP 21157969**

(43) Date of publication of application:
**27.12.2023  Bulletin 2023/52**

(73) Proprietor: **SABIC Global Technologies B.V.
4612 PX Bergen op Zoom (NL)**

(72) Inventors:
• **KRIST, Johan, Maria
6160 GA Geleen (NL)**
• **THEUNISSEN, Mark, Leo, Hendrik
6160 GA Geleen (NL)**

(74) Representative: **Sabic Intellectual Property Group
Sabic Intellectual Property Department
P.O. Box 3008
6160 GA Geleen (NL)**

(56) References cited:
**EP-A1- 0 963 406     EP-B1- 0 963 406
US-A- 5 929 129**

**(Cont. next page)**

(52) Cooperative Patent Classification (CPC): (Cont.)

C-Sets
**C08L 23/12, C08L 23/0823, C08L 23/12**

**Description**

The invention relates to a polymer composition comprising a high melt strength polypropylene and mixtures thereof, as well as to foam comprising said composition, a process for the preparation of said foam, articles prepared with said foam and the use of the composition to prepare articles.

Foamable polymer compositions are known in the art. These are used for the preparation of foams in many shapes, such as sheets, rods, tubes, profiles etc. The advantage of using foams is that they are lightweight, thereby reducing transportation costs and downgauging of the amount of material used.

For some applications, such as insulation tubes for pipes for hot water, steam or hot oil, it is important that the foam retains its mechanical properties at high temperatures. Foams having a higher temperature resistance are known, such as elastomer foamed by using AZO compounds and polyurethane foams, but said materials have a number of disadvantageous over polyolefins. For example, such materials can be less easily processed and recycled than polyolefins.

WO01/94092A1 discloses a polyolefin foam that is resistance to temperatures of about 105°C or higher, so that said foams are suitable for e.g. use as insulation material for hot water and steam pipes. According to WO01/94092A1 such foam is produced by a process wherein a homogeneous mixture comprising one of more polyolefins, selected from polypropylenes and polyethylenes and a physical foaming agent and having a melt range as measured by means of scanning differential calorimetry, within the range of 120 to 160°C, is produced, which subsequently, optionally after cooling and granulating, is extruded. In the example of WO01/94092A1, a tubular insulation foam is produced containing from 30 to 65% by weight of Elenac 2426 F low density polyethylene and from 30 to 65% by weight of Lupolen 4261 AG high density polyethylene. However, the resistance of such foam is still too low for certain applications, depending on the heat of the fluid to be transported in the pipe. In addition, a higher heat resistance also provides for a bigger safety margin and may result in a longer life-time for the foam.

Since polypropylene has a higher melting temperature than polyethylene, high melt strength polypropylene foams are preferred over polyethylene foams for high temperature applications. However, as explained above, for some applications, an even better thermostability of the foam is desired.

Therefore, it is the object of the invention to provide foams having a higher thermostability (higher maximum service temperature).

This object is achieved by a polymer composition comprising A) a high melt strength polypropylene in an amount $\geq 30$ wt% and $\leq 90$ wt% based on the polymer composition B) an ethylene-based elastomer having a density $\geq 855$ to $\leq 913$ kg/m3, wherein the density is determined in accordance with ASTM D792 (2008), wherein the ethylene-based elastomer is present in the polymer composition in an amount $\geq 10$wt% and $\leq 49$wt% based on the polymer composition and C) a further polypropylene, wherein the further polypropylene is present in the polymer composition in an amount $\geq 0$wt% and $\leq 60$ wt% based on the polymer composition and wherein the sum of the weight of high melt strength polypropylene and the further polypropylene is $\geq 51$wt% and preferably $\leq 90$wt% based on the sum of the weight of the high melt strength polypropylene, the further polypropylene and the ethylene-based elastomer.

US5,929,129A discloses a foamable, crosslinkable extruded profile comprising a composition including a blend of non-silane-grafted polypropylene with silane-grafted, essentially linear polyolefin, wherein the polyolefin has a resin density in the range of about 0.86 g/cm3 to about 0.96 g/cm3, a melt index in the range of about 0.5 dg/min to about 100 dg/min, a molecular weight distribution in the range of from about 1.5 to about 3.5, and a composition distribution breadth index greater than about 45 percent.

EP0963406A1 discloses a rheology-modified, substantially gel-free TPE composition comprising at least one elastomeric EAO polymer or EAO polymer blend and at least one high melting polymer selected from polypropylene homopolymers and propylene/ethylene copolymers, the composition having at least three of four characteristics, the characteristics being a STI $\geq 20$ a MS $\geq 1.5$ times that of the composition without rheology modification a ST $\geq 10°$ C greater than that of the composition without rheology modification, and an UST limit $\geq 10°$ C greater than that of the composition without rheology modification.

Surprisingly, it has been found that the addition of an ethylene-based copolymer (which has a lower melting temperature) to a polypropylene composition (which has a higher melting temperature than the ethylene-based copolymer) increases the maximum service temperature of the foams prepared from such composition. In addition, an increase in the maximum service temperature of the foams prepared from such composition may increase the life-time of the foams.

Maximum service temperature is defined herein as the highest temperature at which the insulation product, when installed at a recommended thickness in a given application, continues to function with the specified limits of its performance as determined in accordance with EN14707 and Annex B (version October 2012).

In the context of the invention, with 'foamed' or 'foam' is meant that the shape has a lower density due to the presence of gas bubbles (such as air) as compared to the density of the same material without gas bubbles.

Preferably, the melt flow rate of the polymer composition is $\geq 0.50$ and $\leq 8.0$ g/10min, preferably $\geq 0.70$ and $\leq 5.0$ g/1 0min, more preferably $\geq 1.0$ and $\leq 4.0$ g/10min as determined in accordance with ASTM D1238 (2013) at a temperature of 230°C under a load of 2.16 kg.

Preferably, the high melt strength polypropylene composition has a lowest melting temperature $T_1$ and wherein the ethylene-based elastomer has a highest melting temperature $T_2$ and wherein $T_1$ is at least 20 °C higher than $T_2$ and wherein $T_1$ is at most 105° C higher than $T_2$ and wherein $T_1$ and $T_2$ are measured using differential scanning calorimetry (DSC). Preferably, $T_1$ is at least 40°C higher than $T_2$ and at most 70°C higher than $T_2$. More preferably, $T_1$ is at least 450°C higher than $T_2$ and at most 65°C higher than $T_2$. Most preferably, $T_1$ is at least 50°C higher than $T_2$ and at most 60°C higher than $T_2$.

In case the high melt strength polypropylene composition has more than one melting temperature, T1 is the lowest melting temperature measured using DSC. In case the ethylene-based elastomer has more than one melting temperature, T2 is the highest melting temperature measured using DSC.

High melt strength polypropylenes are available in the art. Typically such polypropylenes are branched polypropylene. A branched polypropylene differs from a linear polypropylene in that the polypropylene backbone has side chains, whereas a non-branched (linear) polypropylene does not have side chains on its backbone. There are different ways to achieve branching in polypropylenes. For example, branching can be achieved by using a specific catalyst, for example a specific single-site catalyst, or by chemical modification. EP 1892264 described the preparation of a branched polypropyleen obtained by the use of a specific catalyst. EP0879830 describes the preparation of a branched polypropylene by chemical modification.

WO2009/003930A1 discloses an irradiated polymer composition comprising at least one polyolefin resin and at least one non-phenolic stabilizer, wherein the irradiated polymer composition is produced by a process comprising mixing the polyolefin resin with the non-phenolic stablizer and irradiating this mixture in a reduced oxygen environment. By using the process of WO2009/003930, branched polypropylenes can also be obtained.

Examples of commercially available high melt strength polypropylene include but are not limited to Daploy™ polypropylenes available from Borealis and Bourouge, e.g. Daploy™ WB 135HMS, Daploy™ 135HMS or Daploy™ WB260HMS.

In addition, a high melt strength polypropylene is available from SABle as SABIC® PP UMS 561P as of 18 February 2021.

Preferably, the high melt strength polypropylene is prepared by

a) irradiation of a polypropylene with at least one non-phenolic stabilizer, preferably wherein the non-phenolic stabilizer is chosen from the group of hindered amines, wherein the irradiation is performed with $\geq 2.0$ and $\leq 20$ Megarad electronbeam radiation in a reduced oxygen environment, wherein the amount of active oxygen is $\leq 15\%$ by volume with respect to the total volume of the reduced oxygen environment for a time sufficient for obtaining a long chain branched polypropylene and

b) deactivation of the free radicals in the long chain branched polypropylene to form the high melt strength polypropylene. How to deactivate the free radicals is known in the art, for example by heating as described in WO2009003930A1.

Examples of non-phenolic stabilizers are known in the art and are for example disclosed on pages 37 - 60 of WO2009/003930A1, hereby incorporated by reference. Preferably, the non-phenolic stabiizer is chosen from the group of hindered amines.

More preferably, the non-phenolic stabilizer comprises at least one hindered amine selected from the group of Chimassorb® 944, Tinuvin® 622, Chimassorb® 2020, Chimassorb® 119, Tinuvin® 770, and mixtures thereof, separate or in combination with at least one hydroxylamine, nitrone, amine oxide, or benzofuranone selected from N,N-di(hydrogenated tallow)amine (Irgastab® FS-042), an N,N- di(alkyl)hydroxylamine produced by a direct oxidation of N,N-di(hydrogenated tallow)amine (Irgastab® FS-042), N-octadecyl-$\alpha$-heptadecylnitrone, Genox™ EP, a di(C16 -C18 )alkyl methyl amine oxide, 3-(3,4-dimethylphenyl)-5,7-di-tert-butyl-benzofuran-2-one, Irganox® HP-136 (BFI), and mixtures thereof, and separate or in combination with at least one organic phosphite or phosphonite selected from tris(2,4-di-tert-butylphenyl) phosphite (Irgafos® 168). Even more preferably, the non-phenolic stabilizers of the present subject matter can include those described in U.S. Patents 6,664,317 and 6,872,764, both of which are incorporated herein by reference in their entirety.

Preferably, the high melt strength polypropylene has a melt strength $\geq 10$ cN and $\leq 100$ cN, wherein the melt strength is determined in accordance with ISO 16790:2005 at a temperature of 200°C, using a cylindrical capillary having a length of 20mm and a width of 2mm, a starting velocity $v_0$ of 9.8mm/s and an acceleration of 6mm/s$^2$.

Preferably, the high melt strength polypropylene has a melt strength $\geq 10$ cN , preferably $\geq 20$cN, more preferably $\geq 30$cN, more preferably $\geq 40$cN, more preferably $\geq 45$cN . Even more preferably, the melt strength of the high melt strength polypropylene is $\geq 50$ cN, more preferably $\geq 55$ cN, even more preferably $\geq 60$ cN, most preferably $\geq 65$ cN and/or preferably the melt strength of the high melt strength polypropylene composition is $\leq 95$ cN, for example $\leq 90$ cN, for example $\leq 87$cN.

The melt strength of the high melt strength polypropylene is determined in accordance with ISO 16790:2005 at a temperature of 200°C, using a cylindrical capillary having a length of 20mm and a width of 2mm, a starting velocity v0 of 9.8mm/s and an acceleration of 6mm/s2.

With polypropylene as used herein is meant propylene homopolymer, a copolymer of propylene with an $\alpha$-olefin or a heterophasic propylene copolymer.

Preferably, the high melt strength polypropylene is a polypropylene chosen from the group of propylene homopolymers and propylene copolymers comprising moieties derived from propylene and one or more comonomers chosen from the group of ethylene and alpha-olefins with $\geq 4$ and $\leq 12$ carbon atoms.

Preferably, the propylene copolymer comprises moieties derived from one or more comonomers chosen from the group of ethylene and alpha-olefins with $\geq 4$ and $\leq 12$ carbon atoms in an amount of $\leq 10$wt%, for example in an amount of $\geq 1.0$ and $\leq 7.0$wt% based on the propylene copolymer, wherein the wt% is determined using $^{13}$C NMR. For example, the propylene copolymer comprises moieties derived from one or more comonomer chosen from the group of ethylene, 1-butene, 1-pentene, 1-hexene, 4-methyl-1-pentene, 1-heptene, 1-octene, 1-decene and 1-dodecene, preferably moieties derived from ethylene.

Preferably, the the melt flow rate of the high melt strength polypropylene is $\geq 0.50$ and $\leq 8.0$ g/10min, preferably $\geq 0.70$ and $\leq 5.0$ g/10min, more preferably $\geq 1.0$ and $\leq 4.0$ g/10min as determined in accordance with ASTM D1238 (2013) at a temperature of 230°C under a load of 2.16 kg.

Polypropylenes and the processes for the synthesis of polypropylenes are known. A propylene homopolymer is obtained by polymerizing propylene under suitable polymerization conditions. A propylene copolymer is obtained by copolymerizing propylene and one or more other comonomers, for example ethylene, under suitable polymerization conditions. The preparation of propylene homopolymers and copolymers is for example described in Moore, E. P. (1996) Polypropylene Handbook. Polymerization, Characterization, Properties, Processing, Applications, Hanser Publishers: New York.

Propylene homopolymers, propylene copolymers and heterophasic propylene copolymers can be made by any known polymerization technique as well as with any known polymerization catalyst system. Regarding the techniques, reference can be given to slurry, solution or gas phase polymerizations; regarding the catalyst system reference can be given to Ziegler-Natta, metallocene or single-site catalyst systems. All are, in themselves, known in the art.

Preferably, the high melt strength polypropylene has a VOC value as determined in accordance with VDA278 (2011-10) $\leq 250$ $\mu$g/g, preferably a VOC value $\leq 50$ $\mu$g/g and/or an FOG value as determined in accordance with VDA278 (2011-10) $\leq 500$ $\mu$g/g, preferably an FOG-value $\leq 100$ $\mu$g/g.

Preferably, the high melt strength polypropylene has a melt flow rate $\geq 0.5$ and $\leq 8.0$ g/10min, more preferably $\geq 0.7$ and $\leq 5.0$ g/10min, most preferably $\geq 1.0$ and $\leq 4.0$ g/10min as determined in accordance with ASTM D1238 (2013) at a temperature of 230°C under a load of 2.16 kg.

The high melt strength polypropylene is present in the polymer composition in an amount $\geq 30$ wt% and $\leq 90$ wt% based on the polymer composition, preferably in an amount $\geq 40$ wt% and $\leq 85$ wt% based on the polymer composition, for example in an amount $\geq 50$ wt% and $\leq 80$ wt% based on the polymer composition.

The polymer composition may further comprise additives, such as for example flame retardants, pigments, lubricants, slip agents flow promoters, antistatic agents, processing stabilizers, long term stabilisers and/or UV stabilizers. The additives may be present in any desired amount to be determined by the man skilled in the art, but are preferably present $\geq 0.001$ wt% and $\leq 5.0$ wt%, more preferably $\geq 0.01$ wt% and $\leq 4.0$ wt%, even more preferably $\geq 0.01$ wt% and $\leq 3.0$ wt%, even more preferably $\geq 0.01$ wt% and $\leq 2.0$ wt% based on the polymer composition.

Preferably, the high melt strength polypropylene, the ethylene-based elastomer and the further polypropylene are present in an amount $\geq 85$wt%, preferably $\geq 90$wt% based on the polymer composition.

The polymer composition may further comprise a nucleating agent. A nucleating agent may be desired to increase the cell density and to modify the dynamics of bubble formation and growth. (Gendron, Thermoplastic foam Processing, 2005, page 209). The amount of nucleating agent may for example be $\geq 0.010$ wt% and $\leq 5.0$ wt%, for example $\geq 0.030$ wt% and $\leq 4.0$ wt%, for example $\geq 0.050$ wt% and $\leq 3.0$ wt%, preferably $\geq 0.10$ wt% and $\leq 2.5$ wt%, more preferably $\geq 0.30$ wt% and $\leq 1.5$ wt% based on the polymer composition, most preferably $\geq 0.50$ wt% and $\leq 1.2$wt% based on the polymer composition.

Suitable nucleating agents include but are not limited to talc, silica and a mixture of sodium bicarbonate and citric acid. Other suitable nucleating agents include amides, for example azo dicarbonamide, amines and/or esters of a saturated or unsaturated aliphatic ($C_{10}$-$C_{34}$) carboxylic acid. Examples of suitable amides include fatty acid (bis)amides such as for example stearamide, caproamide, caprylamide, undecylamide, lauramide, myristamide, palmitamide, behenamide and arachidamide, hydroxystearamides and alkylenediyl-bis-alkanamides, preferably ($C_2$-$C_{32}$) alkylenediyl-bis-($C_2$-$C_{32}$) alkanamides, such as for example ethylene bistearamide (EBS), butylene bistearamide, hexamethylene bistearamide, ethylene bisbehenamide and mixtures thereof. Suitable amines include or instance ($C_2$-$C_{18}$) alkylene diamines such as for example ethylene biscaproamine and hexamethylene biscaproamine. Preferred esters of a saturated or unsaturated aliphatic ($C_{10}$-$C_{34}$) carboxylic acid are the esters of an aliphatic ($C_{16}$-$C_{24}$) carboxylic acid. Preferably, the nucleating agent is chosen from the group of talc, sodium bicarbonate, citric acid, azodicarbonamide and mixtures thereof, more preferably the nucleating agent is talc.

For the preparation of the foam, it may be desired to use a cell stabilizer. Therefore, the invention also relates to a polymer composition of the invention further comprising a cell stabilizer. Cell stabilizers are permeability modifiers which retard the diffusion of for example hydrocarbons such as isobutane to create dimensionally stable foams. (Gendron, Thermoplastic foam Processing, 2005, pages 31 and 149) Preferred cell stabilizers include but are not limited to glycerol monostearate (GMS), glycerol monopalmitate (GMP), palmitides and/or amides. Suitable amides are for example stearyl stearamide, palmitide and/or stearamide. Suitable mixtures include for example a mixture comprising GMS and GMP or a mixture comprising stearamide and palmitamide. Preferably, in case a cell stabilizer is used, the cell stabilizer is glycerol monostearate or stearamide.

The amount of cell stabiliser to be added depends on desired cell size and the polymer composition used for the preparation of the foam. Generally, the cell stabiliser may be added in an amount $\geq 0.10$ and $\leq 4.0$ wt %.

Therefore, the polymer composition may further comprise a nucleating agent and/or a cell stabilizer.

ethylene-based elastomer

Ethylene-based elastomers may be prepared using methods known in the art, for example by using a single site catalyst, i.e., a catalyst the transition metal components of which is an organometallic compound and at least one ligand of which has a cyclopentadienyl anion structure through which such ligand bondingly coordinates to the transition metal cation. This type of catalyst is also known as "metallocene" catalyst. Metallocene catalysts are for example described in U.S. Patent Nos. 5,017,714 and 5,324,820. The elastomers may also be prepared using traditional types of heterogeneous multi-sited Ziegler-Natta catalysts.

Processes for the preparation of ethylene-based elastomers are known in the art, and include but are not limited to solution processes.

Preferably the ethylene-based elastomer is present in an amount $\geq 10$ wt% and $\leq 49$ wt%, for example in an amount $\geq 15$ wt% and $\leq 47$wt% based on the polymer composition.

Preferably, the density of the ethylene-based elastomer is in the range from 865 to 905 kg/m$^3$, preferably in the range from 895-905 kg/m$^3$, wherein the density is determined in accordance with ASTM D792 (2008).

Preferably, the ethylene-based elastomer is produced using a metallocene catalyst. Preferably, the ethylene-based elastomer comprises moieties derived from ethylene and moieties derived from one or more of 1-butene, 1-hexene and 1-octene, for example 1-octene. For example, the ethylene-based elastomer may comprise $\geq 5.0$ and $\leq 20.0$ wt% of moieties derived from one or more of 1-butene, 1-hexene and 1-octene, preferably derived from one or more of 1-hexene and 1-octene, more preferably derived from 1-octene. Preferably, the ethylene-based elastomer comprises $\geq 5.0$ and $\leq 20.0$ wt% of moieties derived from 1-hexene or 1-octene. Ethylene-based elastomers are commercially available. Examples of commercially available ethylene-1-octene copolymers include but are not limited to ethylene-1-octene sold under the name SABIC® COHERE, SABIC® FORTIFY or SABIC® SUPEER.

Preferably, the melt flow rate of the ethylene-based elastomer is $\geq 0.30$ and $\leq 8.0$ g/10min, preferably $\geq 0.50$ and $\leq 6.0$ g/10min, more preferably $\geq 0.70$ and $\leq 5.0$ as determined in accordance with ASTM D1238 (2013) at a temperature of 190°C under a load of 2.16 kg.

In one embodiment, the polymer composition further comprises a further polypropylene, preferably a further polypropylene in an amount of $\geq 10$ wt% and $\leq 40$ wt% based on the polymer composition.

The further polypropylene can be a propylene homopolymer, a propylene copolymer, for example a copolymer of propylene with an $\alpha$-olefin as described herein or a heterophasic propylene copolymer, for example a heterophasic propylene copolymer as described herein.

Preferably, the melt flow rate of the further polypropylene is $\geq 0.3$ and $\leq 8.0$ g/10min, more preferably $\geq 0.5$ and $\leq 6.0$ g/10min, for example $\geq 0.7$ and $\leq 5.0$ g/10min as determined in accordance with ASTM D1238 (2013) at a temperature of 230°C under a load of 2.16 kg.

In another aspect, the invention relates to a foam comprising the polymer composition of the invention. Preferably, the polymer composition is present in the foam in an amount $\geq 95$ wt% based on the foam. For example, the polymer composition is present in the foam in an amount $\geq 96$ wt%, $\geq 97$ wt%, $\geq 98$ wt%, $\geq 99$ wt%, $\geq 99.5$ wt% based on the foam. Preferably, the foam consists of the polymer composition of the invention.

The polymer composition may further comprise a nucleating agent and/or a cell stabilizer.

The polymer composition may further comprise a nucleating agent. A nucleating agent may be desired to increase the cell density and to modify the dynamics of bubble formation and growth. (Gendron, Thermoplastic foam Processing, 2005, page 209).

The amount of nucleating agent may for example be $\geq 0.010$ wt% and $\leq 5.0$ wt%, for example $\geq 0.030$ wt% and $\leq 4.0$ wt%, for example $\geq 0.050$ wt% and $\leq 3.0$ wt%, preferably $\geq 0.10$ wt% and $\leq 2.5$ wt%, more preferably $\geq 0.30$ wt% and $\leq 1.5$ wt% based on the polymer composition, most preferably $\geq 0.50$ wt% and $\leq 1.2$wt% based on the polymer composition. Suitable nucleating agents include but are not limited to talc, silica and a mixture of sodium bicarbonate and citric acid. Other suitable nucleating agents include amides, for example azo dicarbonamide, amines and/or esters of a saturated or unsaturated aliphatic ($C_{10}$-$C_{34}$) carboxylic acid. Examples of suitable amides include fatty acid (bis)amides such as for example stearamide, caproamide, caprylamide, undecylamide, lauramide, myristamide, palmitamide, behenamide and arachidamide, hydroxystearamides and alkylenediyl-bis-alkanamides, preferably ($C_2$-$C_{32}$) alkylenediyl-bis-($C_2$-$C_{32}$) alkanamides, such as for example ethylene bistearamide (EBS), butylene bistearamide, hexamethylene bistearamide, ethylene bisbehenamide and mixtures thereof. Suitable amines include or instance ($C_2$-$C_{18}$) alkylene diamines such as for example ethylene biscaproamine and hexamethylene biscaproamine. Preferred esters of a saturated or unsaturated aliphatic ($C_{10}$-$C_{34}$) carboxylic acid are the esters of an aliphatic ($C_{16}$-$C_{24}$) carboxylic acid. Preferably, the nucleating agent is chosen from the group of talc, sodium bicarbonate, citric acid, azodicarbonamide and mixtures thereof, more preferably, the nucleating agent is talc.

For the preparation of the foam, it may be desired to use a cell stabilizer. Cell stabilizers are permeability modifiers which retard the diffusion of for example hydrocarbons such as isobutane to create dimensionally stable foams. (Gendron, Thermoplastic foam Processing, 2005, pages 31 and 149) Preferred cell stabilizers include but are not limited to glycerol monostearate (GMS), glycerol monopalmitate (GMP), palmitides and/or amides. Suitable amides are for example stearyl stearamide, palmitide and/or stearamide. Suitable mixtures include for example a mixture comprising GMS and GMP or a mixture comprising stearamide and palmitamide. Preferably, in case a cell stabilizer is used, the cell stabilizer is glycerol monostearate or stearamide.

The amount of cell stabilizer to be added depends on desired cell size and the polymer composition used for the preparation of the foamed sheet. Generally, the cell stabiliser may be added in an amount $\geq 0.10$ and $\leq 3.0$ wt % relative to the polymer composition.

Preferably, the density of the foam is $\leq 650$ kg/m$^3$ and $\geq 10$kg/m$^{3,}$ preferably $\leq 500$ kg/m$^3$ and $\geq 15$kg/m$^{3,}$, for example $\leq 300$ kg/m$^3$ and $\geq 15$ kg/m$^3$, for example $\leq 100$ kg/m$^3$ and $\geq 15$ kg/m$^3$, for example $\leq 50$ kg/m$^3$ and $\geq 20$ kg/m$^3$, wherein the density is determined according to ISO 845 (2006).

Preferably, the foam has an open cell content of $\leq 15.0$ % , preferably $\leq 12.0\%$, more preferably $\leq 10.0\%$, even more preferably $\leq 7.0\%$, even more preferably $\leq 5.0\%$, even more preferably $\leq 4.0\%$, even more preferably $\leq 3.0\%$, even more preferably $\leq 2.0\%$, wherein the open cell content is determined according to ASTM D6226-10.

Processes for the preparation of polypropylene foams and foamed sheets are within the knowledge of the person skilled in the art. In such a process, a melt of a composition of the high melt strength polypropylene mixed with a gaseous or liquid blowing agent agent is suddenly expanded through a pressure drop. Continuous foaming processes as well as discontinuous processes may be applied. In a continuous foaming process, the polymer composition is melted and laden with gas in an extruder under pressures typically above 20 bar before being extruded through a die where the pressure drop causes the formation of a foam. The mechanism of foaming polypropylene in such foam extrusion process is explained, for example, in H. E. Naguib, C. B. Park, N. Reichelt, Fundamental foaming mechanisms governing the volume expansion of extruded polypropylene foams, Journal of Applied Polymer Science, 91, 2661-2668 (2004). Processes for foaming are outlined in S. T. Lee, Foam Extrusion, Technomic Publishing (2000). In a discontinuous foaming process, the polypropylene composition (micro-)pellets are laden with foaming agent under pressure and heated below melting temperature before the pressure in the autoclave is suddenly relaxed. The dissolved foaming agent forms bubbles and creates a foam structure.

Examples of foaming processes include but are not limited to extrusion processes, injection molding processes, a blow-molding processes, autoclave processes and rotomolding processes.

In another aspect, the invention relates to a process for the preparation of the foam of the invention. In particular, the invention relates to a process for the preparation of the foam of the invention, comprising the sequential steps of:

a) providing the polymer composition of the invention
b) adding a blowing agent to the polymer composition, for example wherein the blowing agent is added in an amount $\geq 0.10$ wt% and $\leq 20$ wt% based on the polymer composition and
c) subjecting the mixture of the polymer composition and the blowing agent to a foaming process, preferably an extrusion foaming process to form the foam.

The amount of blowing agent for example depends on the desired density and the polymer composition used. For example, the blowing agent may be used in an amount $\geq 0.10$ wt% and $\leq 20$ wt% based on the polymer composition.

Examples of suitable physical blowing agents include, but are not limited to isobutane, CO2, pentane, butane, nitrogen and/or a fluorohydrocarbon. Preferably, the physical blowing agent is isobutane and/or CO2, most preferably isobutane.

Examples of suitable chemical blowing agents include, but are not limited to citric acid or a citric acid-based material (e.g. mixtures of citric acid and sodium bicarbonate) and azo dicarbonamide. Such chemical blowing agents are for example commercially available from Clariant Corporation under for example the name Hydrocerol ™ CF-40E ™

or Hydrocerol™ CF-05E™.

In case foamed sheets are prepared, these may be stretched monoaxially or biaxially using a manner known per se.

Therefore, the invention also relates to a process for the preparation of the foamed sheet of the invention, comprising the sequential steps of:

a) providing the polymer composition of the invention and

b) adding a blowing agent to the polymer composition, for example wherein the blowing agent is added in an amount $\geq 0.10$ wt% and $\leq 20$ wt% based on the polymer composition and

c) subjecting the mixture of the polymer composition and the blowing agent to a foaming process, preferably a foam extrusion process to form the foamed sheet and

d) stretching the foamed sheet in at least one direction.

The invention also relates to the foamed sheet of the invention, which foamed sheet is stretched in at least one direction, for example the invention relates to the foamed sheet of the invention, wherein the foamed sheet is monoaxially stretched (for example in the machine direction) or for example, the invention relates to the foamed sheet of the invention wherein the foamed sheet is biaxially stretched, for example in both the machine direction (MD) and in the transverse direction(MD). As is known to the person skilled in the art, the stretching in MD and TD may be carried out simultaneously, or in consecutive steps.

The draw ratio in MD may for example be $\geq 1.1$ and $\leq 7.0$, for example $\geq 1.1$ and $\leq 3.0$. The draw ratio in transverse direction may for example be $\geq 1.1$ and $\leq 7.0$, for example $\geq 1.1$ and $\leq 3.0$.

The foams of the invention can suitable be used for the preparation of articles. Examples of articles comprising the foams of the invention include but are not limited to pipes, films, sheets, profiles, rods, planks or tubes. Preferably, the article is an insulation article, for example a pipe insulation article, for example a pipe insulation tube.

In another aspect, the invention relates to the use of the polymer composition of the invention for the preparation of a foam.

It is noted that the invention relates to the subject-matter defined in the independent claims alone or in combination with any possible combinations of features described herein, preferred in particular are those combinations of features that are present in the claims. It will therefore be appreciated that all combinations of features relating to the compositions according to the invention; all combinations of features relating to the processes according to the invention and all combinations of features relating to the compositions according to the invention and features relating to the processes according to the invention are described herein.

It is further noted that the term 'comprising' does not exclude the presence of other elements. However, it is also to be understood that a description on a product/composition comprising certain components also discloses a product/composition consisting of these components. The product/composition consisting of these components may be advantageous in that it offers a simpler, more economical process for the preparation of the product/composition. Similarly, it is also to be understood that a description on a process comprising certain steps also discloses a process consisting of these steps. The process consisting of these steps may be advantageous in that it offers a simpler, more economical process.

The invention is now elucidated by way of the following examples, without however being limited thereto.

Examples

Methods:

melting temperature

The melting temperature of the polymers was measured using a differential scanning calorimeter (DSC, TA Instruments Q20) on the second heating cycle using a heating rate of 10°C/min and a cooling rate of 10°C/min and a temperature range of -40 to 200°C.

melt strength

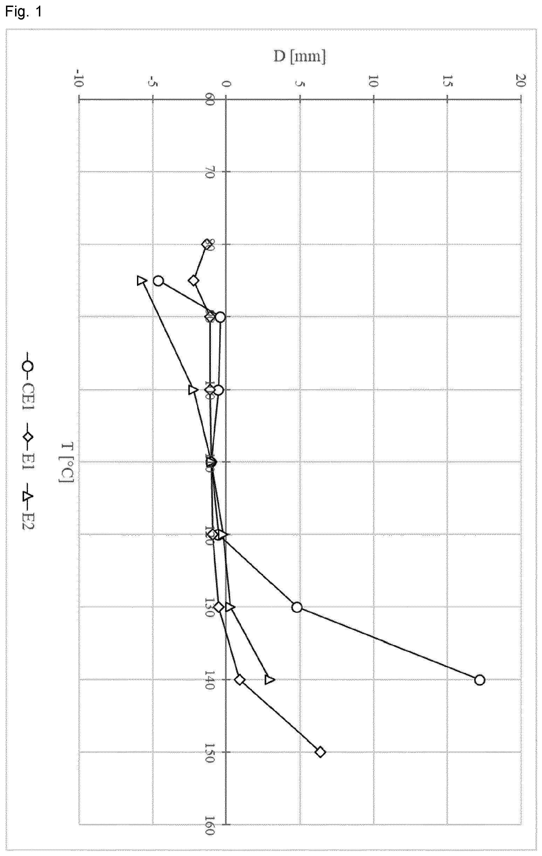

Melt strength was measured according to ISO standard 16790:2005. Melt strength is defined as the maximum (draw-down) force (in cN) by which a molten thread can be drawn before it breaks, e.g. during a Rheotens measurement. Measurements were done on a Göttfert Rheograph 6000 at a temperature of 200 °C with a setup like shown in figure 1 of ISO standard 16790:2005. The rheometer has an oven with a diameter of 12 mm. A capillary of 20 mm length and 2 mm width was used. The entrance angle of the capillary was 180 ° (flat). The piston in the rheometer moved with a velocity of 0.272 mm/s to obtain an exit velocity v0, of 9.8 mm/s. After filling the rheometer, the melt was held in the rheometer for 5 minutes, to stabilize the temperature and fully melt the polymer. The strand that exits the capillary was drawn with a Rheotens II from Goettfert with an acceleration of 6 mm/s$^2$ until breakage occurred. The distance between the exit of the capillary and the uptake wheels of the Rheotens II (= draw length) was 100 mm.

The pressure required to push the melted polymer through the capillary, the maximum drawing force (= Melt strength) and the maximum draw ratio at breakage were recorded.

melt flow rate

The melt flow rate of the polymers was determined in accordance with ASTM D1238 (2013) at a temperature of 190°C (MFR$_{190}$) or 230°C (MFR$_{230}$) under a load of 2.16 kg.

density

The density of the polymers was determined in accordance with ASTM D792 (2008).

Foam density

Density of the foam (kg/m$^3$) is the apparent overall density and was determined according to ISO 845:2006.

Open cell content

The open cell content was determined by using a Quantachrome Pentapyc 5200e gas pycnometer using a method based on ASTM D6226-10. The volume from the external dimensions of the sample was determined by using the Archimedes' principle by immersing the sample in water. It was assumed that the uptake of water by the sample can be neglected. After drying the sample from adhering water, the sample volume (V$_{SPEC}$) was determined by the pycnometer according ASTM D6226-10 at different pressures.

All applied pressures were below 0.1 bar to minimize compression of the foam.

$$V_{SPEC} = V_{CHAMBER} - V_{EXP}/[\frac{P_1}{P_2} - 1]$$

Where:

V$_{SPEC}$ = Volume Sample
V$_{CHAMBER}$ = Volume sample chamber
V$_{EXP}$ = Expansion volume

The sample volume of the foam was plotted against the applied pressures (0.090 bar; 0.075 bar, 0.060 bar, 0.045 bar, 0.035bar, 0.020 bar and 0.010 bar). A straight line was fit through the measurement points, using linear regression. The interception of the linear regression line with the Y-axis at p = 0 bar is the volume (V$_{SPEC\_0}$) used in equation below.

The open cell content V$_{open}$ (%) was calculated using the following formula:

$$O_V = [(V - V_{SPEC\_0})/V] * 100$$

Where:

Ov = open cell content [%]
V = Geometric volume
V$_{SPEC\_0}$ = Volume sample interpolated to a pressure of 0 bar

Maximum service temperature

The maximum service temperature was determined in accordance with EN14707 and Annex B (version October 2012). To this end, the foam samples were subjected to a temperature increase at a rate of 50°C/min and maintained for a period of 72 hours at the temperatures specified in Table 2 below and the thickness of the samples was recorded after having maintained the samples at the specified temperature for a period of 72 hours. The deviation of the thickness of the sample as compared to the initial thickness at 23°C was plotted against the temperatures and the measurement points were connected. The temperature at which the plot did not show a deviation of the thickness of the sample as compared to the original thickness of the sample was recorded as the maximum service temperature.

measurement of outside and inside diameter

The outside and inside diameter the extruded pipes were measured without applying any pressure to the pipe (nor on the inside nor on the outside).

Materials:

**POP** is an ethylene-octene-copolymer commercially available from SABIe as SABIC® COHERE 8102. It is an ethylene-based elastomer and is an ethylene-octene copolymer produced via a solution polymerization process using a metallocene catalyst and has a melt flow rate $MFR_{190}$ of 1.0g/10min, a density of 902 kg/m$^3$ and a melting temperature (Tm) of 100°C.

**PPUMS** is a is a long chain branched propylene homopolymer which is commercially available from SABIe as SABIC® PPUMS 561P as of 18 February 2021, having a melt flow rate $MFR_{230}$ of 2.5 g/10min and a melt strength of 71 cN. The melting temperature of PP-UMS is 162 °C.

**hPP** is a linear propylene homopolymer, commercially available from SABIe as SABIC® PP 525P having a melt flow rate $MFR_{230}$ of 3.0 g/10min, a Tm of 165°C and a density of 905kg/m$^3$.

**AS** is a Atmer™ 7300 50%MB, which is a 50% concentrate in polyethylene containins an anti-static agent and which is commercially available from Croda.

**Talc** is POLYBATCH® FPE 50 T, which is a 50% masterbatch of talcum in polyethylene and which is commercially available fom LyondellBasell.

**PS** is Irganox® B225 is a blend of 50wt% Irgafos® 168 (an organic phosphite of low volatility) and 50wt% Irganox 1010 (hindered phenolic antioxidant) and is a processing and long term thermal stabilizer system; it is commercially available from BASF.

Preparation of the polyolefin foam

Polyolefin foam tubes were prepared from the materials listed above, in weight % as indicated in the below Table 1. To this end, the materials and additives were fed into the feed hopper of a 30 mm twin screw extruder with a length of 40D and an additional meltcooler with oil as heat-transfer medium. Additionally, the extruder was equipped with a short static mixer for the well defined temperature mix of the melt and a 8 mm x 4,5 mm tube die. After the material mixture was melted at a temperate of 215°C, 7wt% isobutane based on the composition used was injected into the molten material mixture and admixed therewith, after which the mixture was cooled down to a temperature of 153°C to obtain additional melt strength. Finally, the mixture was extruded through the die orifice at a die-pressure of 19.5 bar, thereby producing a hollow foam tube. A die of 8 mm with a 4.5 mm thorn was used creating an annular shaped opening. Upon emerging from the die orifice, the foam tube was expanded and fully shaped and cooled before at a distance of several meters and drawn by a pull off-unit. The polyolefin foams were processed with an output of 20kg/h.

Table 1: Compositions used and foam results

|  |  | E1 | CE2 | CE1 |
|---|---|---|---|---|
|  |  | PPUMS+hPP+POP | PPUMS+POP | PPUMS |
| POP | wt% | 25 | 44 |  |
| PP-UMS | wt% | 51 | 47 | 91 |
| hPP | wt% | 15 |  |  |
| AS | wt% | 6 | 6 | 6 |
| talc | wt% | 2 | 2 | 2 |
| PS | wt% | 1 | 1 | 1 |
|  |  |  |  |  |
| density | kg/m$^3$ | 39.5 | 48.7 | 36.3 |

EP 4 294 859 B1

(continued)

| | | E1 | CE2 | CE1 |
|---|---|---|---|---|
| | | PPUMS+hPP+POP | PPUMS+POP | PPUMS |
| open cell content | % | 0.70 | 1.28 | 2.08 |
| Outside diameter | mm | 42.98 | 40.88 | 38.8 |
| Inside diameter | mm | 12.4 | 10.76 | 10.19 |
| Maximum service temperature | °C | 134 | 124 | 121 |

The thickness of the foams thus prepared was measured at different temperatures in accordance with EN14707 and Annex B (version October 2020) and the results are shown in Fig. 1 and Table 2 herein .

Brief description of the figures

Figure 1 (Fig. 1) shows the difference (D) between the thickness of the sample (in mm) as compared to the initial thickness (in mm) at 23°C against the temperature (T).
Table 2. Results of the measurement of the foam in accordance with EN14707 and Annex B (version October 2012).

| | E1 | CE2 | CE1 |
|---|---|---|---|
| | PPUMS+hPP+POP | PPUMS+POP | PPUMS |
| Temperature (°C) | Deviation in thickness as compared to room temperature sample before maximum service temperature testing (mm) | | |
| 80 | -1.3 | | |
| 85 | -2.2 | -5.7 | - 4.6 |
| 90 | -1.1 | | - 0.4 |
| 100 | -1.1 | -2.2 | - 0.5 |
| 110 | -1.0 | -1.0 | -1.0 |
| 120 | -0.9 | -0.2 | 0.5 |
| 130 | -0.5 | 0.3 | 4.8 |
| 140 | 0.9 | 3.0 | 17.2 |
| 150 | 6.4 | | |
| | | | |
| Maximum service temperature | 134 | 124 | 121 |

Conclusion

As can be seen from the above results, the foams prepared from the compositions of the invention have a higher maximum service temperature than the comparative examples. The use of a further propylene, for example a propylene homopolymer increases the maximum service temperature even further. This makes the compositions of the invention very suitable for applications for which a higher maximum service temperature is required, such as foams used for insulation of pipe used for transporting high temperature fluids, such as hot water or oil; or gas.

**Claims**

1. Polymer composition comprising

    A) a high melt strength polypropylene in an amount $\geq$ 30 wt% and $\leq$ 90 wt% based on the polymer composition, wherein the high melt strength polypropylene has a melt strength $\geq$ 10 cN and $\leq$ 100 cN as determined in accordance with ISO 16790:2005 at a temperature of 200°C, using a cylindrical capillary having a length of 20mm and a width of 2mm, a starting velocity $v_0$ of 9.8mm/s and an acceleration of 6mm/s$^2$
    B) an ethylene-based elastomer having a density $\geq$ 855 to $\leq$ 913 kg/m3, wherein the density is determined in accordance with ASTM D792 (2008), wherein the ethylene-based elastomer is present in the polymer composition in an amount $\geq$ 10wt% and $\leq$ 49wt% based on the polymer composition and
    C) a further polypropylene, wherein the further polypropylene is present in the polymer composition in an amount $\geq$ 10wt% and $\leq$ 60 wt% based on the polymer composition

    and wherein the sum of the weight of high melt strength polypropylene and the further polypropylene is $\geq$ 51wt% based on the sum of the weight of the high melt strength polypropylene, the further polypropylene and the ethylene-based elastomer.

2. Polymer composition according to claim 1, wherein the melt flow rate of the polymer composition is $\geq$ 0.50 and $\leq$ 8.0 g/10min, preferably $\geq$ 0.70 and $\leq$ 5.0 g/10min, more preferably $\geq$ 1.0 and $\leq$ 4.0 g/10min as determined in accordance with ASTM D1238 (2013) at a temperature of 230°C under a load of 2.16 kg.

3. Polymer composition according to claim 1 or claim 2, wherein the high melt strength polypropylene has a lowest melting temperature $T_1$ and wherein the ethylene-based elastomer has a highest melting temperature $T_2$ and wherein $T_1$ is at least 20 °C higher than $T_2$ and wherein $T_1$ is at most 105° C higher than $T_2$ and wherein $T_1$ and $T_2$ are measured using differential scanning calorimetry.

4. Polymer composition according to any one of claims 1-3,
    wherein the high melt strength polypropylene is a polypropylene chosen from the group of propylene homopolymers and propylene copolymers comprising moieties derived from propylene and one or more comonomers chosen from the group of ethylene and alpha-olefins with $\geq$ 4 and $\leq$ 12 carbon atoms, preferably ethylene.

5. Polymer composition according to any one of claims 1-4, wherein the high melt strength polypropylene has a melt flow rate $\geq$ 0.50 and $\leq$ 8.0 g/10min, preferably a melt flow rate $\geq$ 0.70 and $\leq$ 5.0 g/10min, most preferably a melt flow rate $\geq$ 1.0 and $\leq$ 4.0g/10min as determined in accordance with ASTM D1238 (2013) at a temperature of 230°C under a load of 2.16 kg.

6. Polymer composition according to any one of claims 1-5, wherein the high melt strength polypropylene composition is prepared by

    a) irradiation of a polypropylene with at least one non-phenolic stabilizer, preferably wherein the non-phenolic stabilizer is chosen from the group of hindered amines, wherein the irradiation is performed with $\geq$ 2.0 and $\leq$ 20 Megarad electronbeam radiation in a reduced oxygen environment, wherein the amount of active oxygen is $\leq$ 15% by volume with respect to the total volume of the reduced oxygen environment for a time sufficient for obtaining a long chain branched polypropylene and
    b) deactivation of the free radicals in the long chain branched polypropylene to form the high melt strength polypropylene.

7. Polymer composition according to any one of claims 1-6, wherein the high melt strength polypropylene is present in an amount $\geq$ 40wt% and $\leq$ 85wt% based on the polymer composition and/or wherein the ethylene-based elastomer is present in an amount $\geq$ 10 wt% and $\leq$ 49 wt% based on the polymer composition.

8. Polymer composition according to any one of claims 1-7, wherein the density of the ethylene-based elastomer is in the range from 865 to 905 kg/m$^3$, preferably in the range from 895-905 kg/m$^3$, wherein the density is determined in accordance with ASTM D792 (2008) and/or wherein the ethylene-based elastomer is produced using a metallocene catalyst.

9. Polymer composition according to any one of claims 1-8, wherein the ethylene-based elastomer comprises moieties derived from ethylene and moieties derived from one or more of 1-butene, 1-hexene and 1-octene, for example 1-octene and/or wherein the melt flow rate of the ethylene-based elastomer is ≥ 0.30 and ≤ 8.0 g/10min, preferably ≥ 0.50 and ≤ 6.0 g/10min, more preferably ≥ 0.70 and ≤ 5.0 as determined in accordance with ASTM D1238 (2013) at a temperature of 190°C under a load of 2.16 kg.

10. Polymer composition according to any one of claims 1-9, wherein the polymer composition comprises a further polypropylene in an amount of ≥ 10 wt% and ≤ 40 wt% based on the polymer composition and/or wherein the further polypropylene is polypropylene chosen from the group of propylene homopolymers, propylene copolymers and/or heterophasic propylene copolymers.

11. Polymer composition according to any one of claims 1-10, wherein the polymer composition further comprises ≥ 0.001 wt% and ≤ 5.0 wt% additives based on the polymer composition and/or wherein the high melt strength polypropylene, the ethylene-based elastomer and the further polypropylene are present in an amount ≥ 85wt% based on the polymer composition.

12. Foam comprising the polymer composition of any one of claims 1-11, preferably consisting of the polymer composition of any one of claims 1-11 and/or preferably wherein the polymer composition further comprises a nucleating agent and/or a cell stabilizer.

13. Foam according to claim 12, wherein the density of the foam is ≤ 650 and ≥ 10 kg/m$^3$ as determined according to ISO 845 (2006) and/or wherein the wherein the foam has an open cell content ≤ 15.0 % , preferably ≤ 12.0%, more preferably ≤ 10.0%, even more preferably ≤ 7.0%, even more preferably ≤ 5.0%, even more preferably ≤ 4.0%, even more preferably ≤ 3.0%, even more preferably ≤ 2.0%, wherein the open cell content is determined according to ASTM D6226-10.

14. Article comprising the foam of claim 12 or 13, wherein the article is a pipe, film, sheet, profile, rod, plank or a tube, preferably wherein the article is an insulation article, for example a pipe insulation article.

15. Process for the preparation of a foam, comprising the sequential steps of:

a) providing the polymer composition of any one of claims 1-11 and
b) adding a blowing agent to the polymer composition, for example wherein the blowing agent is added in an amount ≥ 0.10 wt% and ≤ 20 wt% based on the polymer composition and
c) subjecting the mixture of the polymer composition and the blowing agent to a foaming process, preferably an extrusion foaming process to form the foam.

**Patentansprüche**

1. Polymerzusammensetzung, umfassend

A) ein Polypropylen mit hoher Schmelzfestigkeit in einer Menge von ≥ 30 Gew.-% und ≤ 90 Gew.-% basierend auf der Polymerzusammensetzung, wobei das Polypropylen mit hoher Schmelzfestigkeit eine Schmelzfestigkeit von ≥ 10 cN und ≤ 100 cN aufweist, bestimmt nach ISO 16790:2005 bei einer Temperatur von 200 °C, unter Verwendung einer zylindrischen Kapillare, die eine Länge von 20 mm und eine Breite von 2 mm aufweist, einer Startgeschwindigkeit $v_0$ von 9,8 mm/s und einer Beschleunigung von 6 mm/s$^2$.
B) ein Elastomer auf Ethylenbasis, das eine Dichte von ≥ 855 bis ≤ 913 kg/m3 aufweist, wobei die Dichte nach ASTM D792 (2008) bestimmt ist, wobei das Elastomer auf Ethylenbasis in der Polymerzusammensetzung in einer Menge von ≥ 10 Gew.-% und ≤ 49 Gew.-% basierend auf der Polymerzusammensetzung vorhanden ist, und
C) ein weiteres Polypropylen, wobei das weitere Polypropylen in der Polymerzusammensetzung in einer Menge von ≥ 10 Gew.-% und ≤ 60 Gew.-% basierend auf der Polymerzusammensetzung vorhanden ist

und wobei die Summe des Gewichts des Polypropylens mit hoher Schmelzfestigkeit und des weiteren Polypropylens ≥ 51 Gew.-% ist, basierend auf der Summe des Gewichts des Polypropylens mit hoher Schmelzfestigkeit, des weiteren Polypropylens und des Elastomers auf Ethylenbasis.

2. Polymerzusammensetzung nach Anspruch 1, wobei die Schmelzflussrate der Polymerzusammensetzung ≥ 0,50 und ≤ 8,0 g/10 min, bevorzugt ≥ 0,70 und ≤ 5,0 g/10 min, bevorzugter ≥ 1,0 und ≤ 4,0 g/10 min ist, bestimmt nach ASTM D1238 (2013) bei einer Temperatur von 230 °C unter einer Last von 2,16 kg.

3. Polymerzusammensetzung nach Anspruch 1 oder Anspruch 2, wobei das Polypropylen mit hoher Schmelzfestigkeit eine niedrigste Schmelztemperatur $T_1$ aufweist und wobei das Elastomer auf Ethylenbasis eine höchste Schmelztemperatur $T_2$ aufweist und wobei $T_1$ mindestens 20 °C höher ist als $T_2$ und wobei $T_1$ höchstens 105 °C höher ist als $T_2$ und wobei $T_1$ und $T_2$ unter Verwendung von dynamischer Differenzkalorimetrie gemessen werden.

4. Polymerzusammensetzung nach einem der Ansprüche 1-3, wobei das Polypropylen mit hoher Schmelzfestigkeit ein Polypropylen ist, das aus der Gruppe von Propylenhomopolymeren und Propylencopolymeren ausgewählt ist, die Reste umfassen, die von Propylen und einem oder mehreren Comonomeren abgeleitet sind, die aus der Gruppe von Ethylen und Alpha-Olefinen mit $\geq 4$ und $\leq 12$ Kohlenstoffatomen, bevorzugt Ethylen, ausgewählt sind.

5. Polymerzusammensetzung nach einem der Ansprüche 1-4, wobei das Polypropylen mit hoher Schmelzfestigkeit eine Schmelzflussrate von $\geq 0,50$ und $\leq 8,0$ g/10 min, bevorzugt eine Schmelzflussrate von $\geq 0,70$ und $\leq 5,0$ g/10 min, besonders bevorzugt eine Schmelzflussrate von $\geq 1,0$ und $\leq 4,0$ g/10 min aufweist, bestimmt nach ASTM D1238 (2013) bei einer Temperatur von 230 °C unter einer Last von 2,16 kg.

6. Polymerzusammensetzung nach einem der Ansprüche 1-5, wobei die Polypropylenzusammensetzung mit hoher Schmelzfestigkeit hergestellt wird durch

a) Bestrahlung eines Polypropylens mit mindestens einem nicht-phenolischen Stabilisator, wobei der nicht-phenolische Stabilisator bevorzugt aus der Gruppe von gehinderten Aminen ausgewählt ist, wobei die Bestrahlung mit Elektronenstrahlstrahlung von $\geq 2,0$ und $\leq 20$ Megarad in einer sauerstoffreduzierten Umgebung durchgeführt wird, wobei die Menge an aktivem Sauerstoff $\leq 15$ Volumen-% in Bezug auf das Gesamtvolumen der sauerstoffreduzierten Umgebung für eine Zeit, die ausreicht, um ein langkettiges verzweigtes Polypropylen zu erhalten, beträgt, und
b) Deaktivierung der freien Radikale in dem langkettigen verzweigten Polypropylen, um das Polypropylen mit hoher Schmelzfestigkeit zu bilden.

7. Polymerzusammensetzung nach einem der Ansprüche 1-6, wobei das Polypropylen mit hoher Schmelzfestigkeit in einer Menge von $\geq 40$ Gew.-% und $\leq 85$ Gew.-% basierend auf der Polymerzusammensetzung vorhanden ist und/oder wobei das Elastomer auf Ethylenbasis in einer Menge von $\geq 10$ Gew.-% und $\leq 49$ Gew.-% basierend auf der Polymerzusammensetzung vorhanden ist.

8. Polymerzusammensetzung nach einem der Ansprüche 1-7, wobei die Dichte des Elastomers auf Ethylenbasis im Bereich von 865 bis 905 kg/m$^3$, bevorzugt im Bereich von 895-905 kg/m$^3$ liegt, wobei die Dichte nach ASTM D792 (2008) bestimmt wird und/oder wobei das Elastomer auf Ethylenbasis unter Verwendung eines Metallocenkatalysators hergestellt wird.

9. Polymerzusammensetzung nach einem der Ansprüche 1-8, wobei das Elastomer auf Ethylenbasis Reste, die von Ethylen abgeleitet sind, und Reste, die von einem oder mehreren von 1-Buten, 1-Hexen und 1-Octen abgeleitet sind, umfasst, zum Beispiel 1-Octen, und/oder wobei die Schmelzflussrate des Elastomers auf Ethylenbasis $\geq 0,30$ und $\leq 8,0$ g/10 min, bevorzugt $\geq 0,50$ und $\leq 6,0$ g/10 min, bevorzugter $\geq 0,70$ und $\leq 5,0$ ist, bestimmt nach ASTM D1238 (2013) bei einer Temperatur von 190 °C unter einer Last von 2,16 kg.

10. Polymerzusammensetzung nach einem der Ansprüche 1-9, wobei die Polymerzusammensetzung ein weiteres Polypropylen in einer Menge von $\geq 10$ Gew.-% und $\leq 40$ Gew.-% basierend auf der Polymerzusammensetzung umfasst und/oder wobei das weitere Polypropylen ein Polypropylen ist, das aus der Gruppe von Propylenhomopolymeren, Propylencopolymeren und/oder heterophasischen Propylencopolymeren ausgewählt ist.

11. Polymerzusammensetzung nach einem der Ansprüche 1-10, wobei die Polymerzusammensetzung weiter $\geq 0,001$ Gew.-% und $\leq 5,0$ Gew.-% Additive basierend auf der Polymerzusammensetzung umfasst und/oder wobei das Polypropylen mit hoher Schmelzfestigkeit, das Elastomer auf Ethylenbasis und das weitere Polypropylen in einer Menge von $\geq 85$ Gew.-% basierend auf der Polymerzusammensetzung vorhanden sind.

12. Schaum, umfassend die Polymerzusammensetzung nach einem der Ansprüche 1-11, die bevorzugt aus der Polymerzusammensetzung nach einem der Ansprüche 1-11 besteht und/oder wobei die Polymerzusammensetzung bevorzugt weiter ein Nukleierungsmittel und/oder einen Zellstabilisator umfasst.

**13.** Schaum nach Anspruch 12, wobei die Dichte des Schaums $\leq 650$ und $\geq 10$ kg/m$^3$ ist, bestimmt nach ISO 845 (2006), und/oder wobei der Schaum einen Gehalt an offenen Zellen von $\leq 15,0$ % aufweist, bevorzugt $\leq 12,0$ %, bevorzugter $\leq 10,0$ %, noch bevorzugter $\leq 7,0$ %, noch bevorzugter $\leq 5,0$ %, noch bevorzugter $\leq 4,0$ %, noch bevorzugter $\leq 3,0$ %, noch bevorzugter $\leq 2,0$ %, wobei der Gehalt an offenen Zellen nach ASTM D6226-10 bestimmt ist.

**14.** Artikel, umfassend den Schaum nach Anspruch 12 oder 13, wobei der Artikel ein Rohr, eine Folie, ein Blatt, ein Profil, eine Stange, ein Brett oder eine Röhre ist, wobei der Artikel bevorzugt ein Isolierungsartikel, zum Beispiel ein Rohrisolierungsartikel ist.

**15.** Prozess für die Herstellung eines Schaums, umfassend die folgenden aufeinanderfolgenden Schritte:

a) Bereitstellen der Polymerzusammensetzung nach einem der Ansprüche 1-11 und
b) Hinzufügen eines Treibmittels zu der Polymerzusammensetzung, wobei zum Beispiel das Treibmittel in einer Menge von $\geq 0,10$ Gew.-% und $\leq 20$ Gew.-% basierend auf der Polymerzusammensetzung hinzugefügt wird, und
c) Unterziehen der Mischung aus der Polymerzusammensetzung und dem Treibmittel einem Schäumprozess, bevorzugt einem Extrusionsschäumprozess, um den Schaum zu bilden.

**Revendications**

**1.** Composition polymère comprenant

A) un polypropylène à haute résistance à l'état fondu en une quantité $\geq 30$ % en poids et $\leq 90$ % sur la base de la composition polymère, dans laquelle le polypropylène à haute résistance à l'état fondu présente une résistance à l'état fondu $\geq 10$ cN et $\leq 100$ cN telle que déterminée conformément à la norme ISO 16790:2005 à une température de 200 °C, en utilisant un capillaire cylindrique présentant une longueur de 20 mm et une largeur de 2 mm, une vitesse de départ $v_0$ de 9,8 mm/s et une accélération de 6 mm/s$^2$
B) un élastomère à base d'éthylène présentant une densité $\geq 855$ à $\leq 913$ kg/m3, dans laquelle la densité est déterminée conformément à la norme ASTM D792 (2008), dans laquelle l'élastomère à base d'éthylène est présent dans la composition polymère en une quantité $\geq 10$ % en poids et $\leq 49$ % en poids sur la base de la composition polymère et
C) un polypropylène supplémentaire, dans laquelle le polypropylène supplémentaire est présent dans la composition polymère en une quantité $\geq 10$ % en poids et $\leq 60$ % en poids sur la base de la composition polymère

et dans laquelle la somme du poids du polypropylène à haute résistance à l'état fondu et du polypropylène supplémentaire est $\geq 51$ % en poids sur la base de la somme du poids du polypropylène à haute résistance à l'état fondu, du polypropylène supplémentaire et de l'élastomère à base d'éthylène.

**2.** Composition polymère selon la revendication 1, dans laquelle l'indice de fluidité à chaud de la composition polymère est $\geq 0,50$ et $\leq 8,0$ g/10 min, de préférence $\geq 0,70$ et $\leq 5,0$ g/10 min, plus préférentiellement $\geq 1,0$ et $\leq 4,0$ g/10 min tel que déterminé conformément à la norme ASTM D1238 (2013), à une température de 230 °C sous une charge de 2,16 kg.

**3.** Composition polymère selon la revendication 1 ou la revendication 2, dans laquelle le polypropylène à haute résistance à l'état fondu présente une température de fusion la plus basse $T_1$ et dans laquelle l'élastomère à base d'éthylène présente une température de fusion la plus élevée $T_2$ et dans laquelle $T_1$ est au moins 20 °C supérieure à $T_2$ et dans laquelle $T_1$ est au plus 105 °C supérieure à $T_2$ et dans laquelle $T_1$ et $T_2$ sont mesurées à l'aide d'une calorimétrie différentielle à balayage.

**4.** Composition polymère selon l'une quelconque des revendications 1-3, dans laquelle le polypropylène à haute résistance à l'état fondu est un polypropylène choisi dans le groupe des homopolymères de propylène et des copolymères de propylène comprenant des fractions dérivées du propylène et un ou plusieurs comonomères choisis dans le groupe de l'éthylène et des alpha-oléfines avec $\geq 4$ et $\leq 12$ atomes de carbone, de préférence l'éthylène.

**5.** Composition polymère selon l'une quelconque des revendications 1-4, dans laquelle le polypropylène à haute résistance à l'état fondu présente un indice de fluidité à chaud $\geq 0,50$ et $\leq 8,0$ g/10 min, de préférence un indice de fluidité à chaud $\geq 0,70$ et $\leq 5,0$ g/10 min, le plus préférentiellement un indice de fluidité à chaud $\geq 1,0$ et $\leq 4,0$ g/10 min tel que déterminé conformément à la norme ASTM D1238 (2013) à une température de 230 °C sous une charge de 2,16 kg.

6. Composition polymère selon l'une quelconque des revendications 1-5, dans laquelle la composition de polypropylène à haute résistance à l'état fondu est préparée par

a) irradiation d'un polypropylène avec au moins un stabilisant non phénolique, de préférence dans laquelle le stabilisant non phénolique est choisi dans le groupe des amines encombrées, dans laquelle l'irradiation est effectuée avec un rayonnement électronique ≥ 2,0 et ≤ 20 mégarads dans un environnement à teneur réduite en oxygène, dans laquelle la quantité d'oxygène actif est ≤ 15 % en volume par rapport au volume total de l'environnement à teneur réduite en oxygène pendant une durée suffisante pour obtenir un polypropylène ramifié à longue chaîne et
b) désactivation des radicaux libres dans le polypropylène ramifié à longue chaîne pour former le polypropylène à haute résistance à l'état fondu.

7. Composition polymère selon l'une quelconque des revendications 1-6, dans laquelle le polypropylène à haute résistance à l'état fondu est présent en une quantité ≥ 40 % en poids et ≤ 85 % en poids sur la base de la composition polymère et/ou dans laquelle l'élastomère à base d'éthylène est présent en une quantité ≥ 10 % en poids et ≤ 49 % en poids sur la base de la composition polymère.

8. Composition polymère selon l'une des revendications 1-7, dans laquelle la densité de l'élastomère à base d'éthylène est comprise dans la plage de 865 à 905 kg/m3, de préférence dans la plage de 895 à 905 kg/m3, dans laquelle la densité est déterminée conformément à la norme ASTM D792 (2008) et/ou dans laquelle l'élastomère à base d'éthylène est produit à l'aide d'un catalyseur métallocène.

9. Composition polymère selon l'une quelconque des revendications 1-8, dans laquelle l'élastomère à base d'éthylène comprend des fractions dérivées de l'éthylène et des fractions dérivées d'un ou plusieurs parmi le 1-butène, le 1-hexène et le 1-octène, par exemple le 1-octène et/ou dans laquelle l'indice de fluidité à chaud de l'élastomère à base d'éthylène est ≥ 0,30 et ≤ 8,0 g/10 min, de préférence ≥ 0,50 et ≤ 6,0 g/10 min, plus préférentiellement ≥ 0,70 et ≤ 5,0 tel que déterminé conformément à la norme ASTM D1238 (2013) à une température de 190 °C sous une charge de 2,16 kg.

10. Composition polymère selon l'une quelconque des revendications 1-9, dans laquelle la composition polymère comprend un polypropylène supplémentaire en une quantité ≥ 10 % en poids et ≤ 40 % en poids sur la base de la composition polymère et/ou dans laquelle le polypropylène supplémentaire est un polypropylène choisi dans le groupe des homopolymères de propylène, des copolymères de propylène et/ou des copolymères de propylène hétérophasiques.

11. Composition polymère selon l'une quelconque des revendications 1-10, dans laquelle la composition polymère comprend en outre ≥ 0,001 % en poids et ≤ 5,0 % en poids d'additifs sur la base de la composition polymère et/ou dans laquelle le polypropylène à haute résistance à l'état fondu, l'élastomère à base d'éthylène et le polypropylène supplémentaire sont présents en une quantité ≥ 85 % en poids sur la base de la composition polymère.

12. Mousse comprenant la composition polymère selon l'une quelconque des revendications 1-11, de préférence consistant en la composition polymère selon l'une quelconque des revendications 1-11 et/ou de préférence dans laquelle la composition polymère comprend en outre un agent de nucléation et/ou un stabilisateur cellulaire.

13. Mousse selon la revendication 12, dans laquelle la densité de la mousse est ≤ 650 et ≥ 10 kg/m$^3$ telle que déterminée selon la norme ISO 845 (2006) et/ou dans laquelle la mousse présente une teneur en cellules ouvertes ≤ 15,0 %, de préférence ≤ 12,0 %, plus préférentiellement ≤ 10,0 %, encore plus préférentiellement ≤ 7,0 %, encore plus préférentiellement ≤ 5,0 %, encore plus préférentiellement ≤ 4,0 %, encore plus préférentiellement ≤ 3,0 %, encore plus préférentiellement ≤ 2,0 %, dans laquelle la teneur en cellules ouvertes est déterminée selon la norme ASTM D6226-10.

14. Article comprenant la mousse selon la revendication 12 ou 13, dans lequel l'article est un tuyau, un film, une feuille, un profilé, une tige, une planche ou un tube, de préférence dans lequel l'article est un article isolant, par exemple un article isolant de tuyau.

15. Processus de préparation d'une mousse, comprenant les étapes séquentielles consistant à :

16

a) fournir la composition polymère selon l'une quelconque des revendications 1-11 et

b) ajouter un agent gonflant à la composition polymère, par exemple dans lequel l'agent gonflant est ajouté en une quantité $\geq 0,10$ % en poids et $\leq 20$ % en poids sur la base de la composition polymère et

c) soumettre le mélange de la composition polymère et de l'agent gonflant à un processus de moussage, de préférence un processus de moussage par extrusion pour former la mousse.

Fig. 1

EP 4 294 859 B1

18

**EP 4 294 859 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0194092 A1
- US 5929129 A
- EP 0963406 A1
- EP 1892264 A
- EP 0879830 A
- WO 2009003930 A1
- WO 2009003930 A
- US 6664317 B
- US 6872764 B
- US 5017714 A
- US 5324820 A

**Non-patent literature cited in the description**

- **MOORE, E. P.** Polypropylene Handbook. Polymerization, Characterization, Properties, Processing, Applications. Hanser Publishers, 1996
- **GENDRON.** *Thermoplastic foam Processing,* 2005, 209
- **GENDRON.** *Thermoplastic foam Processing,* 2005, 31, , 149
- **H. E. NAGUIB ; C. B. PARK ; N. REICHELT.** Fundamental foaming mechanisms governing the volume expansion of extruded polypropylene foams. *Journal of Applied Polymer Science,* 2004, vol. 91, 2661-2668
- **S. T. LEE.** Foam Extrusion. Technomic Publishing, 2000